(19)

**Europäisches Patentamt**

**European Patent Office**

**Office européen des brevets**

(11) **EP 4 028 742 B1**

(12) **EUROPEAN PATENT SPECIFICATION**

(45) Date of publication and mention
of the grant of the patent:
**01.11.2023   Bulletin 2023/44**

(21) Application number: **20772378.4**

(22) Date of filing: **09.09.2020**

(51) International Patent Classification (IPC):
***G01M 5/00*** *(2006.01)*

(52) Cooperative Patent Classification (CPC):
**G01M 5/0041**

(86) International application number:
**PCT/GB2020/052163**

(87) International publication number:
**WO 2021/048540 (18.03.2021 Gazette 2021/11)**

(54) **APPARATUS FOR MEASURING SOIL CONTACT STRESSES**

VORRICHTUNG ZUR MESSUNG VON BODENKONTAKTSPANNUNGEN

APPAREIL DE MESURE DE CONTRAINTES DE CONTACT AVEC LE SOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **09.09.2019   GB 201912976**

(43) Date of publication of application:
**20.07.2022   Bulletin 2022/29**

(73) Proprietor: **Oxford University Innovation Limited
Oxford, OX2 0JB (GB)**

(72) Inventors:
• **SHEIL, Brian
Oxford OX2 0JB (GB)**
• **TEMPLEMAN, Jack
Oxford OX2 0JB (GB)**

(74) Representative: **Dehns
St. Bride's House
10 Salisbury Square
London EC4Y 8JD (GB)**

(56) References cited:
**CN-A- 107 034 870     US-A1- 2003 106 379**

EP 4 028 742 B1

## Description

This invention relates to an apparatus for measuring soil contact stresses, in particular to an apparatus for measuring contact stresses between the apparatus and soil in contact with the apparatus.

Large scale construction typically involves underground (e.g. concrete) structures, such as caissons or tunnels. In such structures, part of the structure contacts the soil. It is often desired to measure the normal and frictional contact stresses between the soil and the structure. Knowing these contact stresses helps to inform the design, construction and ongoing monitoring of a structure, particularly in construction processes such as shaft sinking and tunnelling, when a structure is being moved relative to the soil.

The measurement of contact stresses experienced by a structure from the soil are typically affected by temperature (of the structure and/or the soil), soil solid particles and water pressure. For example, the total normal stress exerted by the soil on the structure is the sum of the normal stress from the solid particles in the soil and the pore pressure from the water within pores in the soil. The effective stress from the solid particles in the soil is important to know as this is what governs the development of frictional stresses from the soil, owing to water being unable to sustain a shear force. It is therefore desirable to be able to measure the water pore pressure in the soil, as well as the total normal stress, to enable the effective normal stress from the solid particles in the soil to be deduced.

Soil sensors for measuring the contact stresses are typically very intricate structures in order that they are able to resolve all the forces that soils exert onto structures. Such sensors are difficult and expensive to fabricate and, owing to their complexity, are impractical to modify to incorporate additional functionality or newer technology. Soil sensors may use electrical gauging techniques; however, these are prone to electromagnetic interference and susceptible to water damage.

Furthermore, in order to be able to measure the pore water pressure and the dependence of the contact stresses on the temperature of the soil, for example, multiple different types of sensors may need to be provided, such that it may not be possible to provide all the sensors in the same location. This arrangement of different sensors in different places makes it difficult to determine the contact stresses at a particular location accurately.

The aim of the present invention is to provide an improved apparatus for measuring soil contact stresses.

US 2003/106379 A1 discloses a stress sensor that is suited for measurement of stress between adjacent mated bodies, such as at an interface. CN107034870A discloses an example of device for testing pore water pressure. The device comprising a permeable stone, a hollow space comprised within inner walls of a fixing steel plate, with part of the steel plate being covered by the permeable stone. A pressure gauge is positioned in the hollow space to measure the pore water pressure.

When viewed from a first aspect the invention provides an apparatus as claimed in claim 1.

The present invention provides an apparatus for measuring contact stresses on the apparatus that are exerted by soil in contact with the apparatus. The apparatus is formed from an inner body and an outer body. The inner body has an (e.g. planar) outer face and one or more side walls, and defines an impermeable volume within the inner body. Thus preferably the outer face and the one or more side walls of the inner body are impermeable and themselves define the impermeable volume (e.g. along with a base of the inner body).

The outer face is arranged to come into contact with soil. Thus, while the outer face forms part of the inner body, it preferably forms an external face of the apparatus.

A plurality of strain sensors are arranged on (e.g. each of) the (e.g. outer surface(s) of the) one or more side walls of the inner body. The strain sensors are operable to measure the strain on the one or more side walls of the inner body, such that the contact stresses are then able to be determined. The one or more side walls are preferably distinct (i.e. different parts of the inner body) from the outer face. The outer face may comprise a face plate. The outer face may extend outside the cross-sectional area of the inner body (in a plane parallel to the outer face, in a plane perpendicular to the one or more side walls of the inner body). This means that, when viewed from the outside (in a direction perpendicular to the plane of the outer face, the area covered by the outer face may be greater than the (corresponding, cross-sectional) area covered by the inner body. Thus preferably the one or more side walls are exposed to the cavity and are not arranged to come into contact with soil.

The outer body at least partially surrounds the inner body, with at least part of the outer body being spaced from the side wall(s) of the inner body. This spacing defines a cavity between (at least part of) the outer body and the (side wall(s) of the) inner body. Part of the outer body is porous such that it permits fluid (or fluid pressure) to pass through itself and into the cavity, thus allowing fluid (or fluid pressure) to come into contact with the side wall(s) of the inner body and act on the plurality of strain sensors.

Thus it will be appreciated that by providing an apparatus that has an outer face that, in use, is in contact with soil and the apparatus is able to allow fluid (e.g. water) (or fluid pressure) from the soil into a cavity, both the contact stresses from the soil and the pore water pressure in the soil are able to be measured by the apparatus at the same location, e.g. using only a single deformable sensor structure. Once the pore water pressure has been measured, this helps to enable the effective normal stress from the solid particles in the soil to be determined. This is an important parameter to be aware of when constructing structures because the effective normal stress governs the development of frictional (transverse) stresses from the soil. This contrasts with conventional soil sensors that are only able to measure the total stress from the soil and require an additional pore water pressure sensor, that has to be positioned away from the strain sensors, in order to estimate the effective normal stress.

By enabling a reliable measurement to be made of the contact stresses of the soil acting on the apparatus, structures coming into contact with this soil can be designed and constructed accordingly. Optimising the design and construction of such structures may enable the mass of, e.g., concrete in the structure to be reduced, which may be very large in the case of caissons and tunnels. This reduction in mass helps to reduce the cost of the construction of these structures.

The apparatus could comprise a standalone apparatus that is arranged to measure contact stresses between itself and soil with which it is in contact. However, preferably the apparatus is arranged to be connected to (e.g. embedded in) a larger structure. Thus the invention also extends to a structure comprising an outer wall arranged to come into contact with soil, wherein the structure comprises the apparatus for measuring contact stresses outlined herein, and wherein the apparatus is arranged in the outer wall of the structure. This arrangement allows the apparatus to measure the contact stresses that the structure experiences from the soil.

The structure may be any suitable and desired type of structure. The apparatus could, for example, be used in any suitable and desired geotechnics application, e.g. any time a structure interacts with soil. In a preferred embodiment the structure comprises a concrete structure. Concrete is used is many modern structures, particularly those involving underground structures and foundations, such as caissons and tunnels.

The apparatus may be any suitable and desired size, e.g. depending on the type of structure that it is being used with. In one embodiment the apparatus has a maximum outer dimension between 40 mm and 300 mm, e.g. between 50 mm and 200 mm, e.g. approximately 100 mm.

The inner body may have any suitable and desired shape. Preferably the one or more side walls are located at the perimeter of (and thus, for example, surround) the outer face of the inner body. Preferably the one or more side walls extend from a perimeter of the outer face. This may be the outermost perimeter or an inset perimeter (closer to the centre of the outer face). Thus preferably the one or more side walls do not project outwards (e.g. into the soil) from the outer face of the inner body.

Preferably the inner body comprises a (e.g. impermeable) base, e.g. on the opposite side of the inner body from the outer face. Thus, preferably the one or more side walls are located at the perimeter of (and thus, for example, surround) the base of the inner body. Preferably the one or more side walls extend from the perimeter of the base. Thus preferably the one or more side walls do not project beyond the base of the inner body. Preferably the base is planar. Preferably the base is parallel to the outer face of the inner body.

In one embodiment the inner body comprises a prism or a cylinder, i.e. having a constant cross-section projected over a length. Preferably the one or more side walls comprise the one or more (e.g. parallel) sides of the prism or cylinder. Thus preferably the one or more side walls of the inner body are extended in the same direction, e.g. away from the outer face, e.g. between the outer face and the base. Preferably the one or more side walls of the inner body (e.g. each) lie in a plane that is perpendicular to the plane of the outer face and/or the plane of the base of the inner body.

Providing a columnar inner body helps to enable the six load components (i.e. the three components of stress (or force) and three components of moments) to act on the inner body and thus be measured by the plurality of strain sensors.

In a preferred embodiment the inner body has a rectangular (e.g. square) cross section, e.g. in a plane parallel to the plane of the outer face and/or the plane of the base. Providing a non-circular cross section breaks the circular symmetry of the inner body and thus helps to enable the fluid pressure in the cavity to act asymmetrically on the inner body, such that the normal forces from the fluid pressure on different sides of the inner body cause bending of the walls of the inner body. This induces a greater strain per unit pressure than the corresponding compressive hoop strain on a circular body, thus making the strain on the non-circular inner body an easier quantity to measure. The inner body may be provided with one or more rounded corners. This may help to improve the ease of machining and instrumentation.

In a preferred set of embodiments the inner body is hollow (e.g. between the one or more side walls and the outer face). Preferably the (hollow) inner body is sealed, e.g. such that fluid cannot flow into the void inside in the inner body. This helps to enable the one or more side walls to be deformed by the stresses and fluid pressure acting on them, such that they can be measured by the plurality of strain sensors.

Thus preferably the one or more side walls of the inner body are deformable. Preferably the one or more side walls of the inner body are elastic. Preferably the outer face and/or the base of the inner body are substantially rigid, e.g. stiffer than the one or more side walls of the inner body. This arrangement helps to allow the stresses acting on the outer face of the inner body to be transferred to the one or more side walls such that the strain sensors are able to detect the stresses. It also helps to generate an appropriate response of the side walls to the stresses and fluid pressure, such that deformation of the side wall(s) the strain sensors to measure the fluid pressure acting on the apparatus, e.g. owing to the deformation of the one or more side walls. The particular stiffness of the inner body that is used may depend on the sensor capacity and/or the type of strain sensors that are used. For example, when electrical foil strain gauges are used, a lower stiffness inner body may be used owing to the lower resolution of such strain gauges, e.g. compared to fibre optic strain gauges that may be able to be used with a higher stiffness inner body.

The relative stiffness of the one or more side walls, the outer face and/or the base of the inner body may be provided in any suitable and desired way. For example, the material used to construct the one or more side walls, the outer face and/or the base of the inner body may be chosen to provide different relative stiffnesses, as appropriate. However, preferably the outer face and/or the base of the inner body are thicker than the one or more side walls of the inner body. This may enable the one or more side walls, the outer face and/or the base of the inner body to be constructed from the same material, which helps to simplify the construction of the apparatus. A thicker outer face and/or base of the inner body may also strengthen the inner body for mounting in or on a structure. The base of the inner body preferably comprises one or more mounting points (e.g. holes or lugs) for mounting the apparatus in or on a structure.

The one or more side walls, the outer face and/or the base of the inner body may be formed as an integral (impermeable) volume. However, preferably the one or more side walls, the outer face and/or the base of the inner body comprise (e.g. two or three) discrete sections of the inner body. This helps to simplify the construction of the inner body, particularly when the outer face and/or the base are thicker than the one or more side walls of the inner body.

When the one or more side walls, the outer face and/or the base of the inner body are formed as discrete components, preferably the outer face and/or the base are connected to the one or more side walls by an impermeable connection. Preferably the impermeable connection comprises a (e.g. bonded) interference fit. Such a fit helps to provide a rigid, built-in connection between the outer face and/or the base and the one or more side walls of the inner body.

Preferably the outer face and/or the base comprise a plug that fits within the (e.g. aperture formed by the) one or more side walls. Providing a plug fit (e.g. using a (e.g. bonded) interference fit) of the outer face and/or the base in the ends of the one or more side walls helps to make the inner body impermeable.

The plug fit of the outer face and/or the base may be provided in any suitable and desired way. Preferably the outer face and/or the base are shaped to mate with the ends of the one or more side walls. Preferably the outer face and/or the base comprises a reduced cross-section (e.g. machined into the) edge, e.g. that fits inside the ends of the one or more side walls.

In one set of embodiments the one or more side walls and one of the outer face and the base are formed (e.g. machined) as a single (e.g. integral) piece. The remaining part of the inner body (i.e. the base or the outer face, as appropriate) may then be attached as appropriate. This has the advantage of, for example, only having to make one connection between the inner body and the base or the outer face.

As will be appreciated, preferably the outer face and/or the base of the inner body are structurally connected to the one or more side walls of the inner body, e.g. by their impermeable connection and/or their plug fit. Providing the outer face in structural contact with the one or more side walls helps to enable stresses acting on the outer face from the soil to be transferred to the strain sensors located on the side wall(s) of the inner body. Thus preferably the outer face is force (stress) receiving.

The inner body may be formed from any suitable and desired material. In one embodiment one or more (e.g. all) of the one or more side walls, the outer face and the base of the inner body comprise aluminium, e.g. an aluminium alloy. Aluminium is substantially resistant to corrosion and thus is suitable for being exposed to the water in soil. Aluminium also has a suitable stiffness for the apparatus, with a Young's modulus of approximately 70 GPa (depending on the composition).

The plurality of strain sensors, arranged on the one or more side walls of the inner body, may be any suitable and desired type of strain sensors. The plurality of strain sensors may comprise (e.g. electrical resistance) strain gauges, e.g. electrical foil strain gauges.

In a preferred set of embodiments, the plurality of strain sensors comprise fibre optic sensors, e.g. fibre Bragg gratings (FBGs). FBGs are sensitive in detecting small deformations and do not necessarily need to be aligned precisely to operate effectively. A plurality of fibre optic sensors (e.g. FBGs) may allow fibre optic sensors (e.g. FBGs) having different reflected wavelengths to be used. FBGs have good measurement resolution compared to conventional strain sensors. This allows for a stiffer sensor to be manufactured. This helps to prevent disrupting the soil stress field that sensor it is intended to measure, which is one of the limitations of conventional, more flexible, sensors. This may help the apparatus to be more sensitive to different magnitudes of stresses and also to variations in temperature.

The plurality of fibre optic sensors (e.g. FBGs) may be provided in separate optical fibres (and thus, e.g., interrogated by separate light sources). However, preferably the plurality of fibre optic sensors (e.g. on each of the one or more side walls of the inner body) are provided in (e.g. multiplexed onto) a single optical fibre. This may allow them to be interrogated by a single (e.g. broadband) light source. Thus, preferably the apparatus comprises one or more (e.g. a single (e.g. broadband)) light sources (e.g. in an optical interrogator) for interrogating the plurality of fibre optic sensors (e.g. FBGs).

The plurality of strain sensors may be arranged on the one or more side walls of the inner body in any suitable and desired way to measure the strain on the one or more side walls of the inner body. Preferably the plurality of strain sensors are located on the outer surface of the one or more side walls of the inner body (i.e. facing the outer body within the cavity, such that they are exposed to the fluid pressure in the cavity). When the inner body comprises a plurality of side walls, preferably the apparatus comprises a plurality of strain sensors arranged on each of the plurality of side walls.

The plurality of strain sensors may be positioned relative to (e.g. aligned with) each other on the one or more side walls of the inner body, e.g. such that there is a known positional relationship between the sensors that can be used to help determine the stresses experienced by the apparatus. The strain sensors may be positioned such that the performance (i.e. the accuracy) of the sensors can be improved, e.g. optimised. This may be done to help reduce the number of strain sensors required, which may help to reduce the total cost of producing the sensor. In some embodiments, the strain sensors may be positioned in locations that are most suitable (e.g. convenient) from a manufacturing point of view. In such embodiments, the strain sensors may be placed in a predetermined layout, e.g. using a temporary framework or jig(s) to hold the sensors in place during manufacture.

However, in a preferred embodiment the plurality of strain sensors are positioned randomly (e.g. non-aligned) on the one or more side walls of the inner body. This allows the strain sensors simply to be placed on the one or more side walls of the inner body without worrying about their positions or alignment with respect to each other. This may be advantageous as optical fibres can be relatively delicate and may not be able to tolerate tight bends, making accurate positioning of the sensors difficult. Instead, as will be discussed further below, the positions of the strain sensors may be determined during calibration of the apparatus, e.g. using machine learning. Preferably the plurality of strain sensors are (e.g. all) arranged non-parallel to each other.

The apparatus may comprise any suitable and desired number of strain sensors. In one embodiment the apparatus comprises fewer than 24 strain sensors, e.g. fewer than 20 strain sensors, e.g. fewer than 14 strain sensors, e.g. fewer than 10 strain sensors, e.g. 8 strain sensors. In one embodiment the apparatus comprises greater than 2 strain sensors, e.g. greater than 4 strain sensors, e.g. greater than 6 strain sensors, e.g. 8 strain sensors. A greater probability of high performance can be achieved by using an increased number of strain sensors, as this provides the machine learning algorithm (in the embodiments that use such an algorithm) with more information, meaning that there is a greater chance of obtaining an accurate prediction of the applied loads. However, in embodiments of the present invention, the number of strain sensors required to obtain an accurate prediction can be (e.g. significantly) less than the number of electrical gauges that are required to be used in traditional sensors.

When the inner body comprises a rectangular cross-section (i.e. such that there are four side walls), preferably the apparatus comprises two strain sensors arranged on each of the side walls of the inner body. Preferably the plurality of strain sensors are uncoupled with respect to each other (e.g. none of plurality of strain sensors is coupled to any of the others of the plurality of strain sensors). These embodiments contrast with conventional soil sensors that include a large number of (e.g. 32) strain sensors that are coupled to each other (e.g. via a Wheatstone bridge configuration).

The outer body may have any suitable and desired shape, such that it at least partially surrounds and is spaced from the inner body, such that a cavity is formed between the inner and outer bodies. Preferably the outer body has substantially the same shape as the inner body, e.g. at least the part of the outer body that is spaced from the inner body to define the cavity. Thus preferably the outer body comprises one or more side walls, e.g. which face the one or more side walls of the inner body respectively. Preferably the inner body is arranged to fit inside the outer body. Thus preferably the one or more side walls of the outer body extend (e.g. fully) around the perimeter of the inner body and/or surround the one or more side walls of the inner body. Preferably the one or more side walls of the outer body are substantially parallel to the respective one or more side walls of the inner body.

Preferably the outer body comprises an aperture (e.g. defined between the perimeter of the one or more side walls), wherein the outer face of the inner body is arranged in the aperture of the outer body, such that the outer face of the inner body is exposed.

Preferably the outer body comprises a base, e.g. on the opposite side of the outer body from the outer face of the inner body (e.g. adjacent (e.g. connected to) the base of the inner body). Thus, preferably the one or more side walls of the outer body are located at the perimeter of (and thus, for example, surround) the base of the outer body. Preferably the one or more side walls extend from the perimeter of the base. Thus preferably the one or more side walls do not project beyond the base of the inner body. Preferably the base is planar. Preferably the base is parallel to the outer face of the inner body.

Preferably the outer body comprises a prism or a cylinder, i.e. having a constant cross-section projected over a length. Preferably the one or more side walls of the outer body comprise the one or more (e.g. parallel) sides of the prism or cylinder. Thus preferably the one or more side walls of the outer body are extended in the same direction. Preferably the one or more side walls of the outer body (e.g. each) lie in a plane that is perpendicular to the plane of the outer face and/or the plane of the base of the inner body.

In a preferred embodiment the outer body has a rectangular (e.g. square) cross section, e.g. in a plane parallel to the plane of the outer face of the inner body and/or the plane of the base (of the outer and/or inner body).

The cavity may be defined by the inner and outer bodies in any suitable and desired way. In one embodiment the (e.g. one or more side walls of the) outer body is spaced from the inner body around (e.g. all of) the one or more side walls of the inner body. Thus preferably the cavity is defined between the one or more side walls of the inner and outer bodies respectively.

The outer body is arranged such that part of it is porous, enabling fluid (e.g. liquid, e.g. water) or fluid pressure to pass through the porous part of the outer body and into the cavity. This enables the pore water pressure in the soil to be measured. Any suitable and desired part of the outer body may be porous. In a preferred embodiment the porous part of the outer body comprises a rim extending around at least some (e.g. all) of the perimeter of the outer face of the inner body. Thus, in one embodiment, the rim comprises a rectangle (e.g. square).

Preferably the rim is between the outer face of the inner body and the one or more side walls of the outer body. Thus, preferably the rim closes and extends across the cavity between the inner and outer bodies. Preferably the rim lies in substantially the same plane as the outer face of the inner body. This allows the porous rim to be exposed to the soil, such that water in the soil can pass through the porous rim. Preferably the rim is secured between the outer face of the inner body and the one or more side walls of the outer body by a (e.g. rubber) sealant. Thus, preferably the rim (and, e.g., the sealant) seal the cavity between the inner and outer bodies. Preferably the sealant is flexible. This helps to avoid tractions or friction applied to the outer face from being carried through the sealant, which may lead to inaccuracies in the strain measurements. This helps to ensure that the full applied force is transferred to the inner body.

Preferably the porous part of the outer body is arranged to prevent soil particles from passing therethrough and into the cavity. Thus preferably the porous part acts as a barrier to solids while being porous to fluids such as water. The porous part of the outer body is made from any suitable and desired porous material. In one embodiment the porous part comprises porous stone, sand embedded in a porous matrix (e.g. (e.g. epoxy) resin) or a sintered metal.

The cavity may initially be empty, such that it is filled with liquid (e.g. water) in the soil when the porous part of the outer body is exposed to soil. However, in a preferred embodiment the cavity is filled with a (e.g. incompressible) fluid, e.g. a liquid, such as water or glycerol. In this embodiment the fluid (e.g. pore water) pressure in the soil acts on the fluid in the cavity through the porous part of the outer body, without removing any of the fluid from the soil, as this may thus adversely affect the measurement of the fluid (e.g. pore water) pressure in the soil. Using a more viscous fluid, such as glycerol, may help to prevent fluid egress from the cavity, e.g. the porous part of the outer body may be arranged to allow water from the soil into the cavity but may not allow a more viscous fluid to escape from the cavity.

The (e.g. data representative of the) strain measurements from the strain sensors may be acquired and processed in any suitable and desired way in order to determine the contact stresses on the apparatus from the soil. While the apparatus could comprise a processor in situ, preferably the data acquired from the strain sensors is transmitted from the apparatus for processing elsewhere. Thus preferably the apparatus comprises a transmitter for acquiring (e.g. data representative of the) measurements from the strain sensors and (e.g. wired) transmitting the (e.g. data representative of the) measurements from the apparatus.

Therefore, when viewed from a further aspect the invention provides a system for measuring contact stresses between the apparatus and soil in contact with the apparatus, the system comprising the apparatus described herein, and processing circuitry (e.g. remote from the apparatus) arranged to determine contact stresses experienced by the outer face from the soil. The invention also extends to a method as claimed in claim 14.

As will be appreciated by those skilled in the art, these aspects may (and preferably do) comprise one or more (e.g. all) of the optional and preferable features outlined herein. In particular, preferably the processing circuitry is arranged to determine (and preferably the method comprises determining) the (e.g. total and/or effective) normal contact stress and (e.g. the two (bi-directional) components of) the frictional (shear) contact stresses of the soil on the outer face of the inner body, using the data representative of the strains experienced by the strain sensors that has been captured by the strain sensors.

Preferably the processing circuitry is arranged to determine (and preferably the method comprises determining) the pore water pressure of the soil on the outer face of the inner body, using the data representative of the strain experienced by the strain sensors, e.g. to determine the effective normal contact stress of the soil on the outer face of the inner body.

The processing circuitry is preferably also arranged to determine (and preferably the method comprises determining) the temperature of (or temperature differences in) the apparatus, using the data representative of the strain experienced by the strain sensors, e.g. from a defined reference temperature. Conventional force sensors used to measure contact stresses do not measure temperature as they simply form combined outputs that are independent of temperature. The determined temperature may then be used to determine the temperature of the soil, e.g. at the outer face of the inner body. By calibrating for temperature, it helps to ensure that all other contact stresses are temperature insensitive.

The above parameters (e.g. one or more (e.g. all) of the (e.g. effective) normal contact stress, the frictional contact stresses, the pore water pressure and the temperature (or temperature differences) of the apparatus or soil) may be determined in any suitable and desired way. In one embodiment the contact stresses are determined by determining the (e.g. three) force and (e.g. three) moment components acting on the (e.g. outer face of the) apparatus. Preferably the force and moment components are determined in the normal and traverse directions to the outer face of the inner body. Thus, for example, the force components acting on the (e.g. outer face of the) apparatus are defined as $F_x$, $F_y$ and $F_z$, and the moment components are defined as $M_x$, $M_y$ and $M_z$, where the x, y and z directions are the orthogonal coordinates in the frame of the apparatus (e.g. with the x and y directions lying in the plane of the outer face and the z direction extending perpendicularly to the plane of the outer face).

Preferably the processing circuitry is arranged to calibrate (and preferably the method comprises calibrating) the plurality of strain sensors, e.g. using data representative of the strains experienced by the strain sensors. Preferably the calibration determines the relationship between the strains measured by the strain sensors and one or more (e.g. all) of the (e.g. effective) normal contact stress, the frictional contact stresses, the pore water pressure and the temperature (or temperature differences) of the apparatus or soil.

Preferably the calibration of the strain sensors comprises using machine learning to determine a mapping of (e.g. data representative of) the strains measured by the strain sensors to one or more (e.g. all) of the (e.g. effective) normal contact stress, the frictional contact stresses, the pore water pressure and the temperature (or temperature differences) of the apparatus or soil. Thus preferably the processing circuitry is arranged to (and preferably the method comprises) perform machine learning to calibrate the plurality of strain sensors.

In one embodiment, e.g. instead of mapping the (e.g. data representative of the) strain measurements to the contact stresses, calibration of the strain sensors comprises using machine learning to map the strains measured by the strain sensors to one or more (e.g. all) of the (e.g. three) force and (e.g. three) moment components acting on the (e.g. outer face of the) apparatus. The contact stresses may then be determined from the force and moment components.

Using machine learning to calibrate the strain sensors such that the (e.g. data representative of the) strain measurements output from the strain sensors may be taken as inputs to map to the output measurements (e.g. those outlined above) is particularly advantageous compared, for example, to conventional approaches that use a linear matrix relationship. These advantages include not having to accurately align the strain sensors on the inner body (compared to the conventional approach in which the strain sensors have to be aligned accurately in, for example, a Wheatstone bridge combination) such that there is more freedom as to where the sensors may be placed, and being able to reduce the number of strain sensors used (compared to the conventional approach in which the number of strain sensors may need to be significantly more than the number of degrees of freedom being measured).

Calibrating for temperature may help to remove cross-coupling and temperature dependence between the strain sensors that is present in conventional apparatus if they are not aligned accurately (e.g. owing to machining tolerance or human error), and may allow temperature changes and/or the pore water pressure to be determined using the strain sensors. It will be seen that the machine learning approach of these embodiments helps to provide a less complex and reduced cost apparatus.

The machine learning calibration of the strain sensors may be performed in any suitable and desired way. In some embodiments, a linear regression model with lasso (least absolute shrinkage and selection operator) may be used. In one embodiment the machine learning is performed using a neural network. Using an artificial neural network is particularly suited to solving problems with multiple inputs and multiple outputs, where the relationship between these inputs and outputs may not be able to be defined analytically (e.g. using linear matrix relationships). The neural network performs a mathematical mapping between a set of inputs and a set of (e.g. predicted) outputs, e.g. to generate the set of outputs.

Preferably the neural network comprises a feedforward neural network, e.g. using a multi-layer perceptron. Preferably the neural network comprises at least three layers of artificial neurons. Preferably the neural network receives a set of inputs which pass into an initial layer of neurons (the "input layer"). Preferably the input layer passes the input forward into a series of hidden layers of neurons, wherein the hidden layers of neurons each comprise a variable number of neurons. Preferably the outputs of the last hidden layer feed into the final layer of neurons (the "output layer") that produce the outputs of the network.

Preferably the calibration comprises performing supervised learning using the neural network on a training set of data. This helps the neural network to determine the mapping of the inputs to the outputs. Preferably the training set of data comprises a set of known inputs and a set of known outputs. Preferably the supervised learning of the neural network comprises reducing (e.g. minimising) an error function. Preferably the error function is defined between predicted outputs of the neural network and known outputs from the training set of data. Preferably the step of reducing (e.g. minimising) the error function comprises varying a set of weights and/or bias values in the error function.

Following the calibration, preferably the determined relationship or mapping is used to determine outputs (e.g. the force components, the moment components, the contact stresses, the pore water pressure and the temperature (e.g. differential), as outlined above) from measured inputs (e.g. the strain measurements).

In operation, when the apparatus is installed (e.g. in a structure) with the outer face of the inner body in contact with soil, preferably the determined (e.g. effective and other) contact stresses are used to inform (and, e.g., modify) the design, construction and/or maintenance of the structure.

The methods in accordance with the present invention may be implemented at least partially using software e.g. computer programs. It will thus be seen that when viewed from further embodiments the present invention provides computer software specifically adapted to carry out the methods herein described when installed on a data processor, a computer program element comprising computer software code portions for performing the methods herein described when the program element is run on a data processor, and a computer program comprising code adapted to perform all the steps of a method or of the methods herein described when the program is run on a data processing system. Thus the invention extends to a computer readable storage medium storing computer software code which when executing on a data processing system performs the methods described herein.

The present invention also extends to a computer software carrier comprising such software arranged to carry out the steps of the methods of the present invention. Such a computer software carrier could be a physical storage medium such as a ROM chip, CD ROM, RAM, flash memory, or disk, or could be a signal such as an electronic signal over wires, an optical signal or a radio signal such as to a satellite or the like.

It will further be appreciated that not all steps of the methods of the present invention need be carried out by computer software and thus from a further broad embodiment the present invention provides computer software and such software installed on a computer software carrier for carrying out at least one of the steps of the methods set out herein.

The present invention may accordingly suitably be embodied as a computer program product for use with a computer system. Such an implementation may comprise a series of computer readable instructions either fixed on a tangible, non-transitory medium, such as a computer readable storage medium, for example, diskette, CD ROM, ROM, RAM, flash memory, or hard disk. It could also comprise a series of computer readable instructions transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink wrapped software, pre-loaded with a computer system, for example, on a system ROM or fixed disk, or distributed from a server or electronic bulletin board over a network, for example, the Internet or World Wide Web.

Certain preferred embodiments for the invention will now be described, by way of example only, with reference to the accompanying drawings in which:

Figures 1a, 1b and 1c show the components of soil contact stresses against a surface of a structure;
Figure 2 shows the normal stress from soil acting on a structure;
Figures 3a and 3b show perspective and exploded views of an apparatus for measuring soil contact stresses, in accordance with an embodiment of the present invention;
Figure 4 shows a cross-sectional view of the apparatus shown in Figures 3a and 3b, embedded in a structure and exposed to soil;
Figure 5 shows a cross-sectional view through the inner column of the apparatus shown in Figures 3a, 3b and 4;
Figures 6a and 6b show cross-sectional views through the inner column of the apparatus shown in Figures 3a, 3b and 4; and Figure 7 shows a system that incorporates the apparatus shown in Figures 3a, 3b and 4;
Figure 8 shows an embodiment of an artificial neural network (ANN) that is used to calculate the output data;
Figure 9 shows schematically the function of a single general artificial neuron in the ANN shown in Figure 8, according to an embodiment of the present invention;
Figure 10 shows schematically force and moment components acting on a body;
Figures 11a, 11b show perspective and exploded views of an apparatus for measuring soil contact stresses, in accordance with another embodiment of the present invention;
Figure 12 shows a cross-sectional view of the apparatus shown in Figures 11a and 11b, embedded in a structure and exposed to soil;
Figure 13 shows a cross-sectional view through the inner column of the apparatus shown in Figures 11a, 11b and 12; and
Figures 14a and 14b show cross-sectional views through the inner column of the apparatus shown in Figures 11a, 11b and 12.

For large scale construction involving underground concrete structures, such as caissons or tunnels, where part of the structure contacts the soil, it is often desired to measure the normal and frictional contact stresses between the soil and the structure. Knowing these contact stresses helps to inform the design, construction and ongoing monitoring of a structure, particularly in construction processes such as shaft sinking and tunnelling, when a structure is being moved relative to the soil.

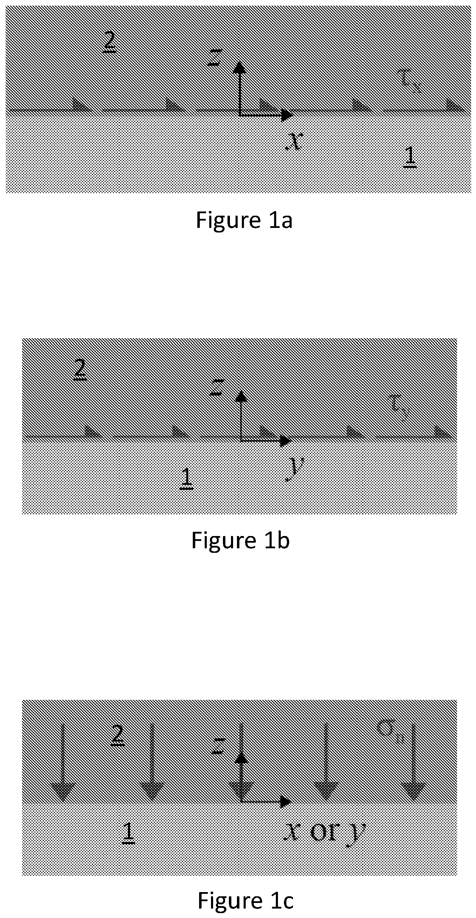

Figures 1a, 1b and 1c show the components of soil contact stresses exerted against a surface of a structure 1. As can be seen in Figures 1a, 1b and 1c, the contact stresses exerted by the soil 2 against the surface of the structure 1 can be split (in a Cartesian coordinate system) into the shear components, $\tau_x$ (Figure 1a) and $\tau_y$ (Figure 1b) that act parallel to the surface of the structure 1, as well the normal component, $\sigma_n$ (Figure 1c) that acts perpendicular to the surface of the structure 1.

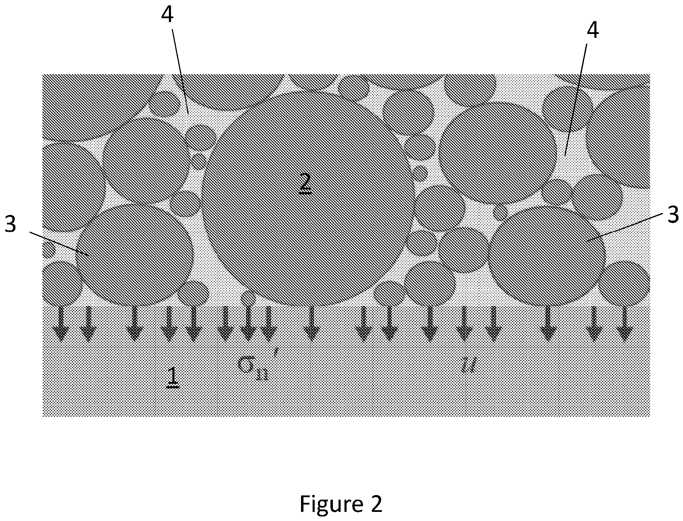

Figure 2 shows the normal stress from soil acting on a structure. Figure 2 shows that the total normal stress at the interface between the soil 2 and the structure 1 consists of contributions from two components: the effective normal stress, $\sigma_n'$, from the solid soil particles 3 and the pore water pressure, u, from the water 4 present in the pores between the soil particles. Thus, the total normal stress, $\sigma_n$, can be expressed as:

$$\sigma_n = \sigma_n' + u$$

The effective stress, $\sigma_n'$, is an important parameter in quantifying, from a soil mechanics point of view, the interface conditions between the soil 2 and the surface of a structure 1, because this is what governs the development of frictional stresses, owing to water being unable to sustain a shear force. By measuring the contact pressure from the soil over the area of a sensor allows the total normal stress, $\sigma_n$, to be determined. To determine the effective normal stress, $\sigma_n'$, a measurement of the pore water pressure is also required.

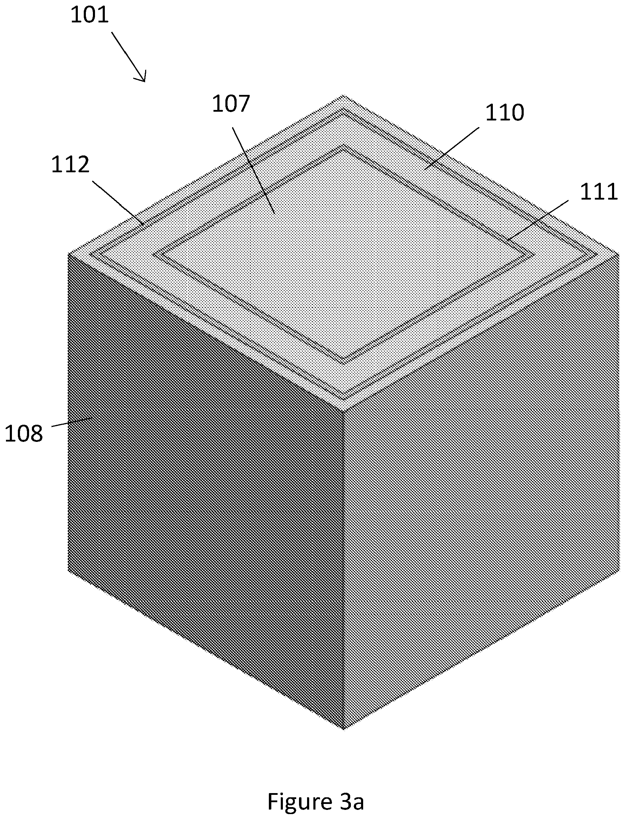

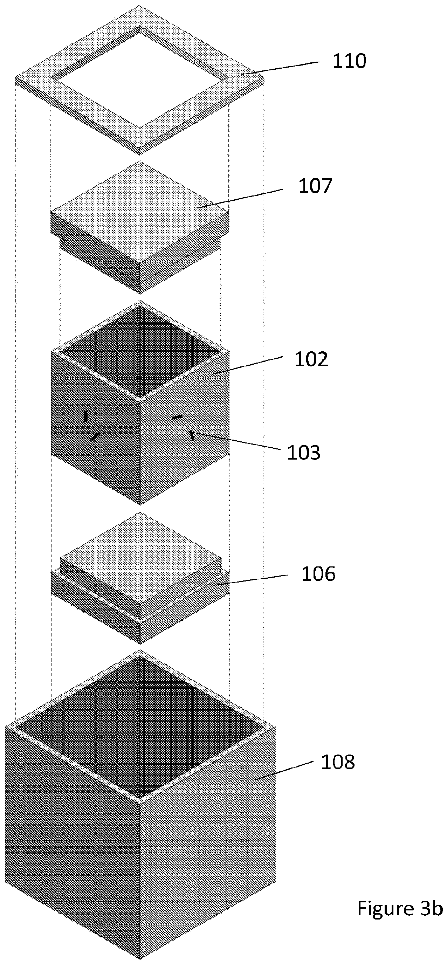

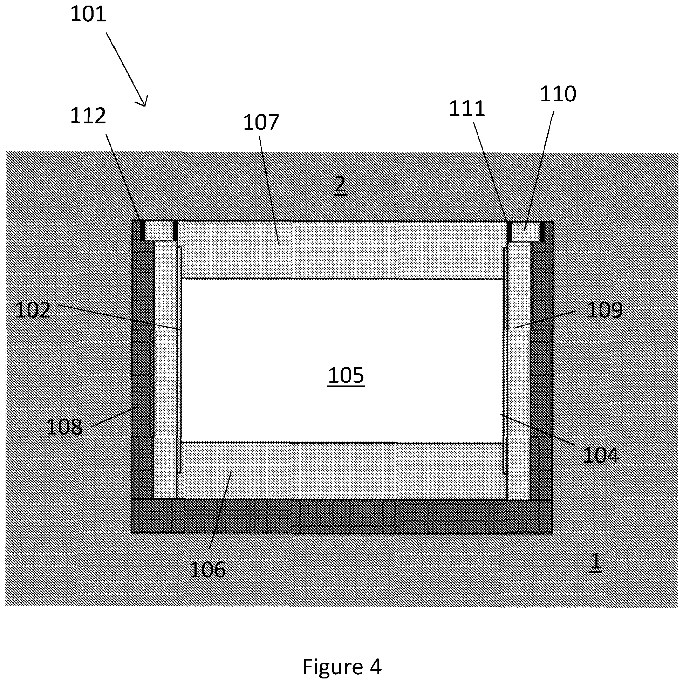

An apparatus, according to an embodiment, that is able to measure soil contact stresses, will now be described. Figures 3a and 3b show perspective and exploded views of a soil structure interaction sensor 101 for measuring soil contact stresses, in accordance with an embodiment of the present invention. Figure 4 shows a cross-sectional view of the soil structure interaction sensor 101 shown in Figures 3a and 3b, embedded in a structure and exposed to soil.

Figures 3a, 3b and 4 show a soil structure interaction sensor 101 in accordance with an embodiment of the present invention. The soil structure interaction sensor 101 is formed from an inner column 102 in the form of an aluminium hollow square box section. Eight optical fibre Bragg grating (FBG) sensors 103 are attached to the outside of the column 102. Two FBG sensors 103 are attached to each of the four deformable side walls 104 of the hollow square box section forming the column 102 and are arranged randomly in any particular configuration (e.g. alignment or orientation) with respect to each other (other than being parallel to each other). The FBG sensors 103 are illuminated with light from an optical interrogator that also receives and detects the reflected light from the FBG sensors 103.

The two open ends of the inner column 102 are sealed by a base plate 106 and a top cap 107, thus forming a hollow internal volume 105. The base plate 106 and the top cap 107 are attached to the inner column 102 by a bonded interference fit that implements a rigid, built-in connection between these components (alternatively, the base plate 106 and the inner column 102, or the inner column 102 and the top cap 107 may be formed as a single piece). The connections between the base plate 106 and the inner column 102, and the top cap 107 and the inner column 102 are also watertight, preventing any water from entering into the hollow internal volume 105 of the inner column 102. The hollow internal volume 105 is evacuated when manufacturing the soil structure interaction sensor 101. In use, the top cap 107 is exposed to, and comes into direct contact with, the soil 2 and thus experiences contact stresses acting on it. Owing to the rigid nature of the connection between the top cap 107 and the inner column 102, these contact stresses are transmitted to the deformable side walls 104 of the inner column 102 where they can be detected by the FBG sensors 103.

The inner column 102 is mounted within a rigid outer housing 108 by affixing the base plate 106 to the base of the outer housing 108. The outer housing 108 is shaped and sized such that its side walls are parallel to and spaced from the side walls 104 of the inner column 102. Thus a cavity 109 is formed between the side walls 104 of the inner column 102 and the outer housing 108. The cavity 109 is filled with water.

The external edge of the cavity 109, between the top cap 107 and the outer housing 108 is plugged by a porous square rim 110 (e.g. made from porous stone or sintered metal). The porous rim 110 is held in place between the top cap 107 and the outer housing 108 by flexible inner and outer seals 111, 112 formed from a rubber sealant. The outer surface of the porous rim 110 lies flush with the outer surface of the top cap 107 and thus the porous rim 110 is, in use of the soil structure interaction sensor 101, in contact with the soil 2. The porosity of the porous rim 110 causes the water in the cavity 109 to be pressure balanced with the pore water pressure in the soil 2.

As shown in Figure 4, the soil structure interaction sensor 101 is embedded in a wall of the structure 1, such that the top cap 107 and the porous rim 110 of the soil structure interaction sensor 101 lie flush with the outer face of the wall of the structure 1. This enables the soil structure interaction sensor 101 to experience the same contact stresses from the soil 2 as the structure 1 in which it is embedded.

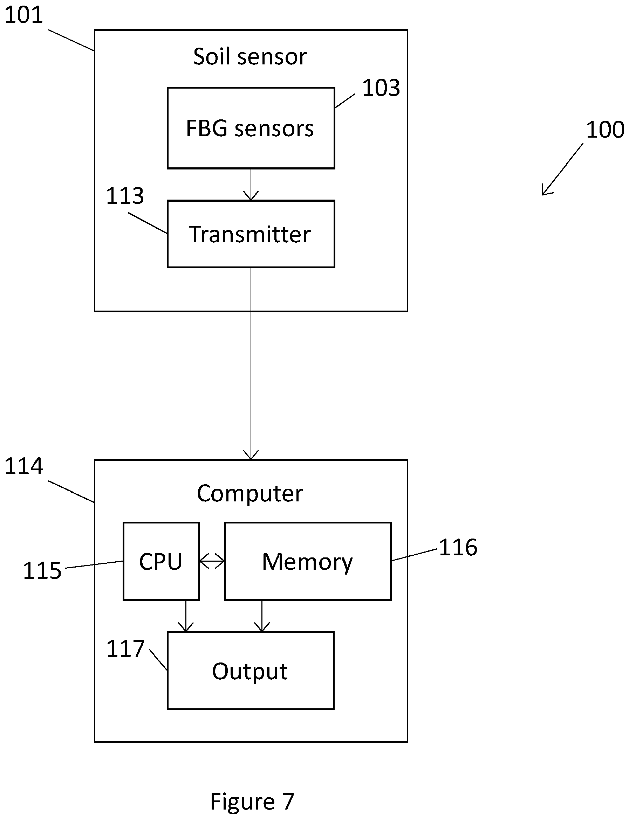

Figure 7 shows a system 100 that incorporates the soil structure interaction sensor 101 shown in Figures 3a, 3b and 4. The soil structure interaction sensor 101, in addition to including the FBG sensors 103 (as shown in Figure 3b), includes a transmitter 113. The transmitter 113 receives data (including (e.g. data representative of the) strain measurements) from the FBG sensors 103 and transmits the data from the soil structure interaction sensor 101 via a wired connection, e.g. between the FBG sensors 103 and the optical interrogator, and between the optical interrogator (e.g. comprising the transmitter 113) and the computer 114.

The system 100 also includes a computer 114 for receiving the data transmitted from the soil structure interaction sensor 101. The computer 114 includes a central processing unit (CPU) 115 for processing the data and a memory 116 (in data communication with the CPU 115) for storing the data and the processed results. The CPU 115 and the memory 116 are also in data communication with an output device 117 (e.g. a display) for outputting (e.g. displaying) the results of the processed data.

Operation of the soil structure interaction sensor 101 will now be described with reference to Figures 1-10.

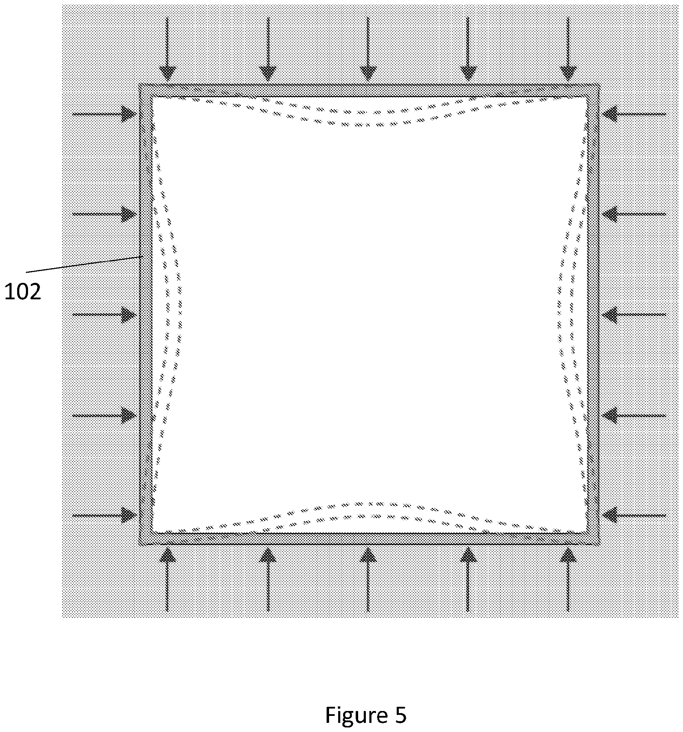

With the soil structure interaction sensor 101 embedded in the structure 1 and exposed to the soil 2, water 4 from pores in the soil 2 passes through the porous rim 110, while soil particles 3 are prevented from passing through. This causes the pressure of the water in the cavity 109 of the soil structure interaction sensor 101 to equalise to the pressure of the water 4 in the soil 2, i.e. the "pore water pressure". The pressurised water in the cavity 109 exerts a distributed load normal to the four deformable walls of the inner column 102 as shown in Figure 5. Figure 5 shows a cross section through the inner column 102 and the cavity 109 of the soil structure interaction sensor 101 in a plane parallel to the outer face of the top cap 107.

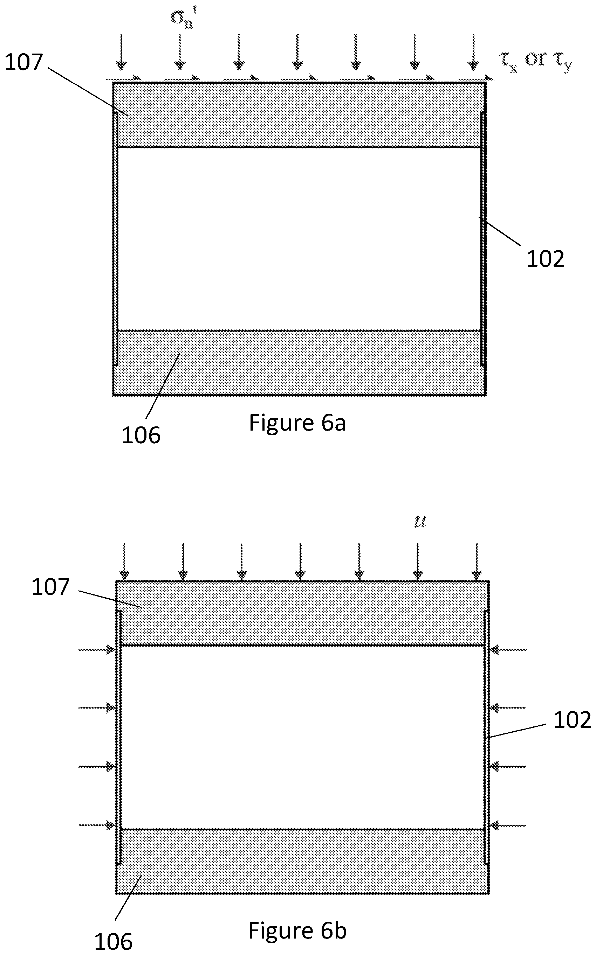

The pressure acting on the walls of the inner column 102 causes the walls to deform as shown in Figure 5, i.e. the displacement of the walls is greater away from the corners of the inner column 102. The deformation of the walls acts on the FBG sensors 103 attached to the walls, such that the FBG sensors 103 measure a strain that has a contribution representative of the pore water pressure, u (as shown in Figures 2 and 6b), in the soil 2. Figures 6a and 6b each show a cross section through the inner column 102 of the soil structure interaction sensor 101 in a plane perpendicular to the outer face of the top cap 107.

The shear components, $\tau_x$ and $\tau_y$, of the soil contact stresses, as well as the effective normal stress, $\sigma_n'$ from the soil particles 3, acting on the top cap 107 of the inner column 102 are also transmitted to the walls of the inner column 102, as shown in Figure 6a. This again causes deformation of the walls that acts on the FBG sensors 103, such that the strain measured by the FBG sensors 103 also has representative contributions from the shear components, $\tau_x$ and $\tau_y$, and the effective normal stress, $\sigma_n'$.

Changes in temperature will also induce strain on the walls of the inner column 102, such that the strain measured by the FBG sensors 103 also has representative contributions from changes in temperature. Any moments applied to the top cap 107 (i.e. through non-uniform stresses) will also induce strain one the walls of inner column 102.

Once the strains have been measured by the FBG sensors 103, the measurements can be used to determine the pore water pressure, the effective normal stress and the transverse stresses acting on the soil structure interaction sensor 101, and thus on the structure 1, along with (e.g. changes in) the temperature. To do this, the strain measurements collected by the FBG sensors 103 are transmitted from the soil structure interaction sensor 101 by the transmitter 113, as shown in Figure 7.

The transmitted strain measurements are received by the computer 114, where they are stored in the memory 116, so that they can be processed by the CPU 115 to determine the contact stresses. In a set of embodiments, as will now be described, a machine learning based approach is used to process the data.

Instead of using a linear matrix relationship between the input data (i.e. the strain measurements) and the output data (the contact stresses), the input-output mapping $\boldsymbol{u} \rightarrow \boldsymbol{f}$, is performed using an artificial neural network (ANN). In the ANN (a type of machine learning system), a network of connected nodes called artificial neurons, which loosely simulate or model the behaviour of biological neurons, are used.

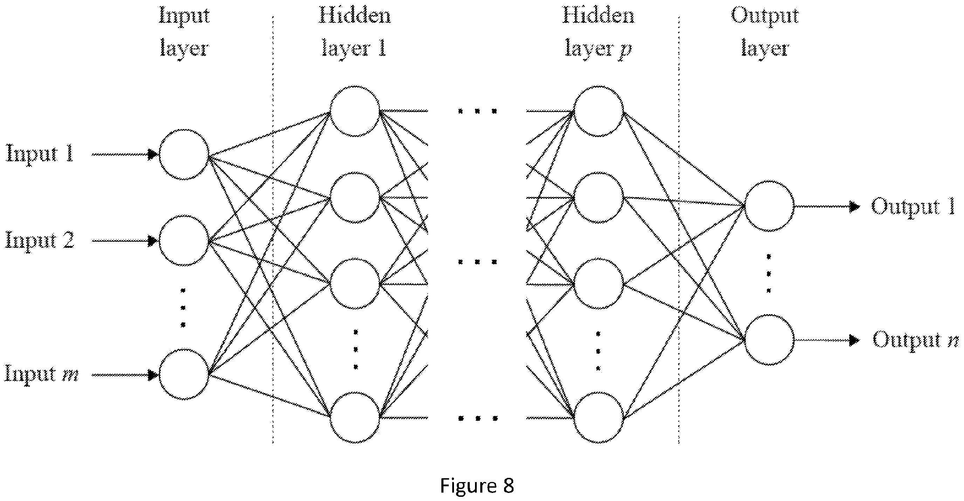

Figure 8 shows an embodiment of an artificial neural network (ANN) that is used to calculate the output data. Figure 8 shows a multi-layer perceptron (MLP), which is a type of feedforward ANN that includes at least three layers of artificial neurons. The network receives a set of m inputs which pass into an initial layer of neurons called the input layer. The input layer passes the input signals forward into a series of p hidden layers of neurons, which can have variable numbers of neurons within them.

The outputs of the final hidden layer then feed into the last layer of neurons, referred to as the output layer, which produce the n outputs of the network.

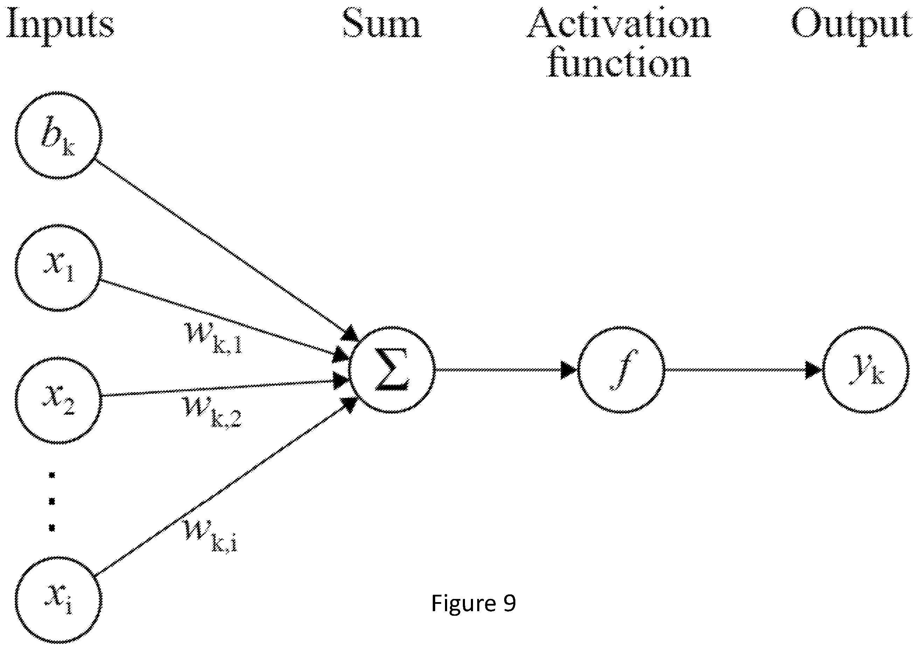

An ANN can be viewed as a system that performs a mathematical mapping between a set of inputs and a set of predicted outputs. The network outputs are produced by processing the network inputs through mathematical functions performed by the individual artificial neurons and their connectivity within the network. Figure 9 shows schematically the function of a single general artificial neuron, e.g. in the ANN shown in Figure 8, according to an embodiment of the present invention.

The artificial neuron shown in Figure 9 is the kth neuron within layer L of the network and it receives i input signals, with values $x_1$ through $x_i$, from the neurons in layer L-1. Each signal connection in the network has an associated weight. The weights corresponding to the inputs to the kth neuron are denoted $w_{k1}$ through $w_{ki}$. Each neuron also receives an additional input of a bias value, denoted $b_k$. The neuron calculates the sum of the products of all input values and their associated weights before producing an output, $y_k$, defined by

$$y_k = f\left(\sum_{j-1}^{i} w_{kj} x_j + b_k\right)$$

where $f$ is the neuron activation function. The activation function can take a variety of forms, but is typically a non-linear function such as a logistic sigmoid, hyperbolic tan or rectified linear function.

For a given network configuration, altering the values of the weights and biases of the neurons allows the model to produce different outputs. The function that maps the inputs to outputs is learned by the ANN through a supervised learning process. This comprises training the network using a dataset of known example input-output pairs. The purpose of training is to adjust the weights and bias values such that the network's predicted outputs closely approximate the actual target outputs. The performance of the network is assessed through an error function, which is a metric that compares the predicted outputs to the target output values for the examples in the training set. The weights and biases are then iteratively updated through a backpropagation algorithm following a gradient descent approach, in which the aim is to minimize the error function.

Applying the ANN shown in Figures 8 and 9 to the strain measurements received by the computer 114 from the FBG sensors 103 of the soil structure interaction sensor 101, the available inputs to the network are the strain measurements from the individual FBG sensors 103. The number of inputs is therefore governed by the total number of FBG sensors 103 employed and these can be grouped into an input vector, $\varepsilon = [\varepsilon_1 \ \varepsilon_2 \ \varepsilon_3 \cdots \varepsilon_m]^T$, where m is the total number of outputs. Each measurement is formed from the output of a single FBG sensor 103.

The output variables to be calculated from the ANN are the force and moment components applied to the sensor (which result from the contact stresses exerted on the top cap 107 of the soil structure interaction sensor 101), as well as the pore water pressure. Temperature compensation may also be performed using this approach, by training the ANN to estimate the relationship between the strain measurements from the FBG sensors 103 and changes in temperature. The temperature change therefore forms an additional output. This results in eight outputs from the ANN, denoted by the vector y = $[F_x \ F_y \ F_z \ M_x \ M_y \ M_z \ u \ \Delta T]^T$, where $F_x \ F_y$ and $F_z$ are the force components, and $M_x \ M_y$ and $M_z$ are the moment components, acting on the top cap 107 of the soil structure interaction sensor 101, $u$ is the pore water pressure and $\Delta T$ is the temperature change. Consequently, the soil structure interaction sensor 101 may also be used as a temperature sensor.

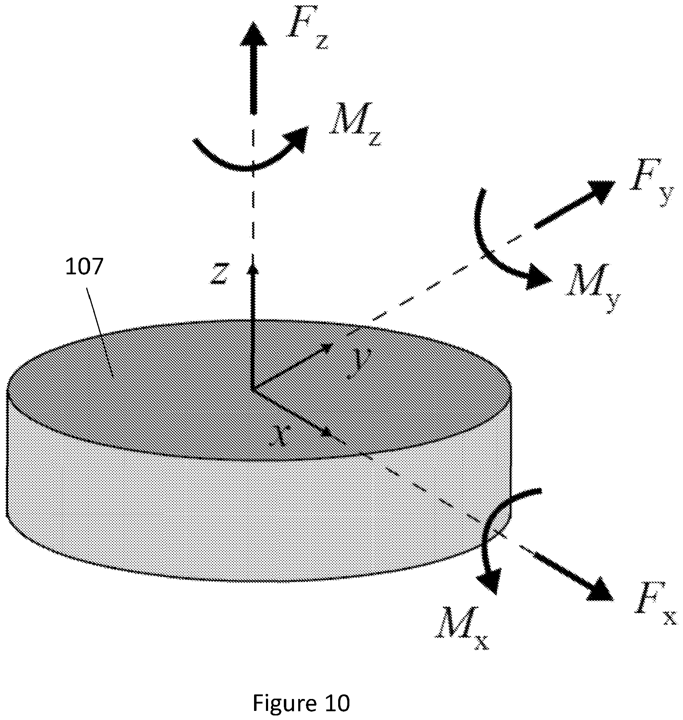

Figure 10 shows these force and moment components acting on a body, e.g. the top cap 107 of the soil structure interaction sensor 101.

In order to initialize the ANN prior to use for prediction, a dataset containing examples of inputs and corresponding target outputs is required. In most ANN applications, a large dataset is first obtained and then divided to produce separate data subsets for training the model and then testing its performance on previously unseen examples. To generate the required data for the soil structure interaction sensor 101, tests are performed to measure the response of the FBG sensors 103 under known values of the load components, pressure and temperatures. This is similar to conducting calibration tests in a traditional sensor approach and similar techniques may be undertaken to obtain the required data for the ANN.

A set of training data is first be generated. Sufficient examples should be provided in this data set in order for the ANN to be able to learn the input-output mapping. Similar tests as traditional calibration may be performed, e.g. applying controlled increments of each load component independently, as these may be the most straightforward tests to perform. However, examples involving combinations of different load components, pressure and temperature may be required, to provide sufficient information for ANN training. The ranges of the forces and temperatures that the soil structure interaction sensor 101 will be exposed to in operation should be captured by the values applied in this training data set.

A further set of previously unseen data may then be required to test the performance of the trained ANN. For the testing data set it is desirable to have a wide range of different combined load components, pressure and temperature cases, to assess the performance of the ANN. To generate both the training and testing data, it is required to have an experimental set up capable of applying and accurately measuring different combinations of the six load components, pressure and temperature changes simultaneously.

After obtaining the datasets for training and testing of the soil structure interaction sensor 101, the input and output data may be processed before they interface with the network, e.g. using linear rescaling of the variables. In this step, each of the variables is scaled to a range of between 0.0 and 1.0 (it will be appreciated that the variables may be scaled to any suitable and desired range, e.g. between -1 and 1). Thus, for an original unscaled variable y, the scaled value, $\bar{y}$, is defined by:

$$\bar{y} = \frac{y - y_{min}}{y_{max} - y_{min}}$$

Where $y_{min}$ and $y_{max}$ are the minimum and maximum values of the variable.

For the target output variables, this scaling is applied independently to each variable. This removes the effect of different ranges of each variable resulting from the different units, ensuring each is given equal weighting in the evaluation of the network cost function. The input variables are instead scaled collectively, such that they vary between a value of 0.0 and 1.0 between the minimum and maximum values across all variables. This collective scaling maintains the relative magnitude of the strain inputs between the variables, preserving information on the sensitivity of the individual FBG sensors 103.

The parameters defining the input and output scaling are determined only using the training dataset. These parameters are then saved and reapplied during testing and then during operation of the soil structure interaction sensor 101. The input scaling is applied to any set of measured input strains before feeding them into the ANN. During training, the output forces and temperature are scaled to form the network target outputs for the backpropagation algorithm. During sensor testing and operation, the outputs obtained from the trained network are inverse transformed by the output scaler to obtain predictions for the unknown applied force components and temperature.

Thus, for a given set of strain measurements obtained by the FBG sensors 103, running the trained ANN allows the six load components, the pore water pressure and the temperature changes to be determined. From this, the contact stresses (including the effective normal contact stress) acting on the top cap 107 of the soil structure interaction sensor 101 may be calculated.

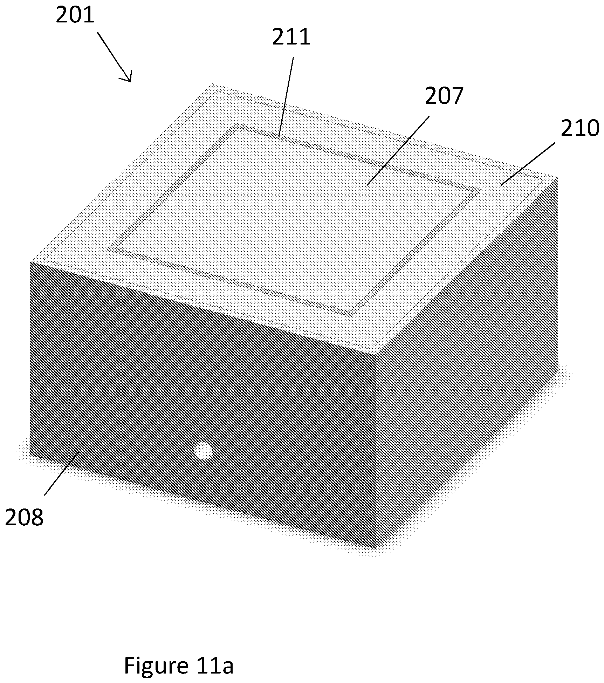

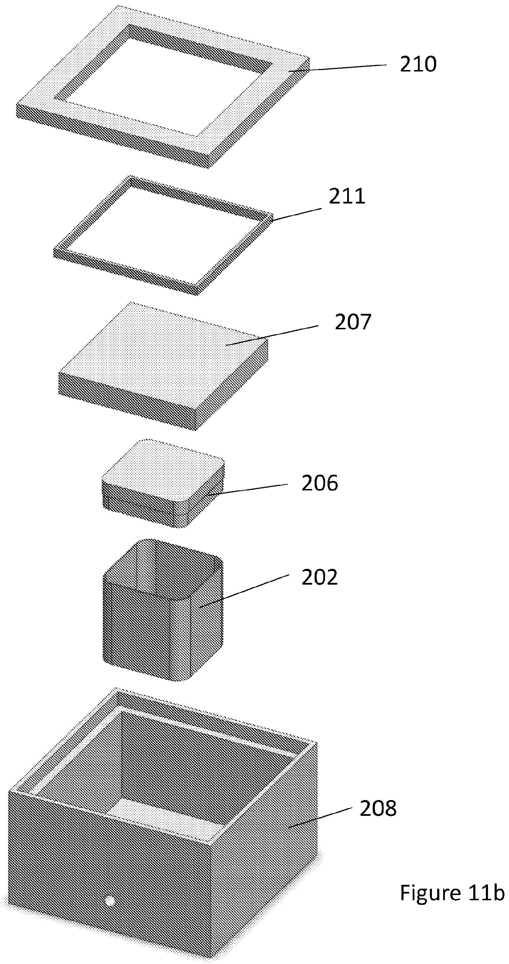

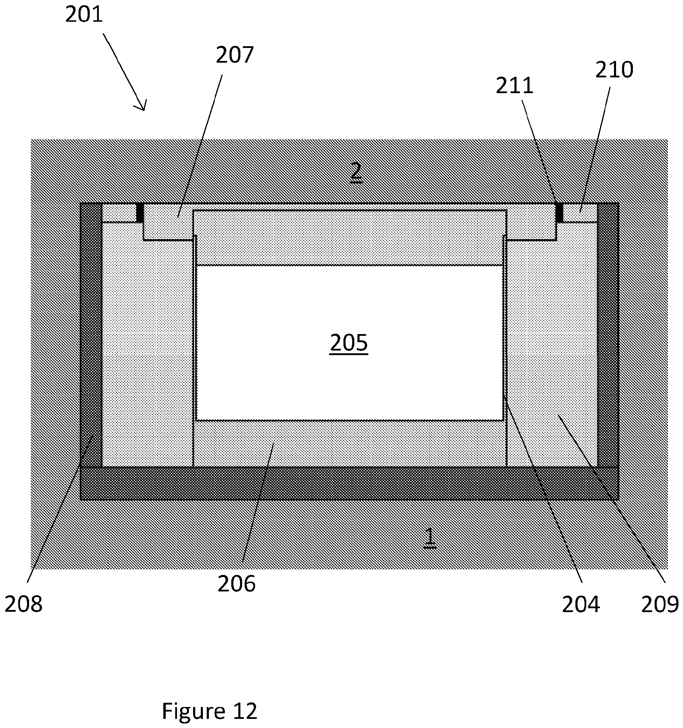

Figures 11a, 11b and 12 show a soil interaction sensor 201, embedded within the wall of the structure 1, in accordance with another embodiment of the present invention. The soil structure interaction sensor 201 is similar to the soil interaction sensor 101 shown in Figures 3a, 3b and 4. The sensor 201 comprises an inner column 202 in the form of a hollow (machined) aluminium alloy structure, comprising a hollow square section with rounded corners (shown in Figure 11b). FBG sensors (not shown in these Figures) are attached to each of the four deformable side walls 204 of the hollow structure forming the column 202.

The sensor 201 further comprises a base plate 206 and a top cap 207. The base plate 206 and the walls 204 may be machined from a single piece of aluminium alloy. The top cap 207 is exposed to, and comes into direct contact with the soil 2. In contrast to the embodiment discussed above, both the base plate 206 and the top cap 207 are formed as a distinct parts, separate from the inner column 202. The base plate 206 and the top cap 207 seal the two open ends of the inner column 202, thus forming a hollow internal volume 205. The top cap 207 has a plan area

(when viewed from above) that is greater than the plan area of the inner column 202, such that the side walls 204 of the inner column 202 extend downwards towards the base plate 206 from an inwardly offset perimeter of the top cap 207.

The inner column 202 is mounted within a rigid outer housing 208, which is shaped and sized such that its side walls are parallel to and spaced from the side walls 204 of the inner column 202, thus forming a cavity 209 therebetween. The cavity 209 is filled with water.

The external edge of the cavity 209, between the top cap 207 and the outer housing 208, is plugged by a porous square rim 210. In contrast with the embodiment discussed above with reference to Figures 3a, 3b and 4, a single flexible seal 211, rather than two seals 111, 112, is provided. The seal 211 is arranged between the porous rim 210 and the top cap 207. The porous rim 210 is attached by epoxy to the outer housing 208.

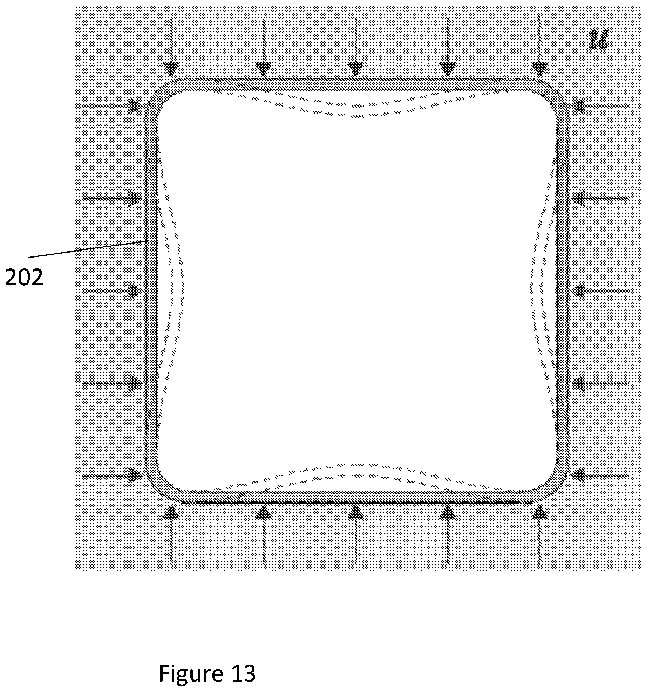

Figure 13 shows a cross-section through the inner column 202 and the cavity 209 of the soil structure interaction sensor 201 in a plane parallel to the outer face of the top cap 207. The pressure acting on the walls of the inner column 202, as described above with reference to the previous embodiment, causes the walls to deform as shown in Figure 13.

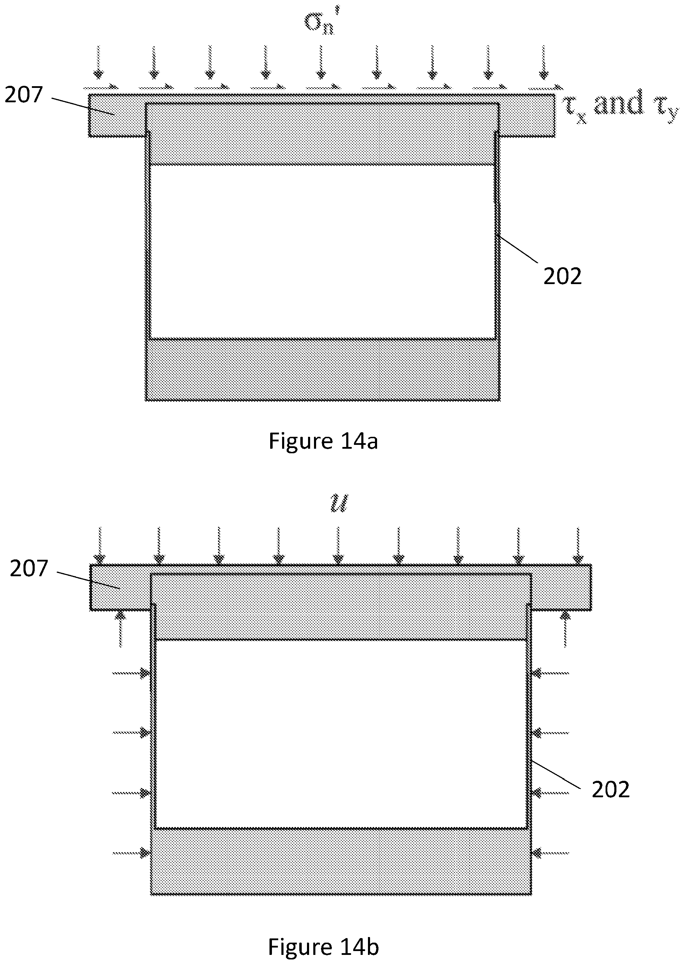

Figures 14a and 14b each show a cross-section through the inner column 202 of the soil structure interaction sensor 201 in a plane perpendicular to the outer face of the top cap 207. The shear components, $\tau_x$ and $\tau_y$, of the soil contact stresses, the effective normal stress, $\sigma_n'$ from the soil particles, and the pore water pressure, u, are similar to the corresponding stresses and pressures shown in Figures 6a and 6b. Thus the soil interaction sensor 201 shown in Figures 11a to 14b operates in a similar manner to the soil interaction sensor 101 shown in Figures 3a to 6b.

The only difference in the stresses and pressures shown in Figures 14a and 14b is owing to the top cap 207 of the soil structure interaction sensor 201, which projects beyond the outer walls of the inner column 202. This creates a component of the pore water pressure, u, which acts against the underneath side of the top cap 207. It will be seen from the above that, in at least preferred embodiments, the invention provides a soil structure interaction sensor measuring contact stresses that are exerted by soil in contact with the sensor. By providing an apparatus that has a cavity that allows the pore water pressure to be measured in the same location as the soil contact stresses, a more accurate determination of the soil contact stresses may be made, using only a single type of strain sensor. This allows the design and construction of structures to be optimised, e.g. enabling the mass of, e.g., concrete in the structure to be reduced, thus helping to reduce the cost of the construction of these structures.

**Claims**

1. An apparatus (101; 201) for measuring contact stresses, the apparatus comprising:

an inner body (102; 202) defining a volume (105; 205), the inner body having an outer face (107; 207) for contacting soil (2) and one or more side walls (104; 204);
a plurality of strain sensors (103) arranged on the one or more side walls of the inner body for measuring strain on the one or more side walls of the inner body, such that the contact stresses are then able to be determined;
**characterised in that**:

the apparatus is adapted for measuring contact stresses between the apparatus and soil in contact with the apparatus;
the volume defined by the inner body is impermeable;
the apparatus further comprises an outer body (108; 208) at least partially surrounding the inner body, wherein at least part of the outer body is spaced from the one or more side walls of the inner body to define a cavity (109; 209) therebetween; and
part (110; 210) of the outer body is porous and is arranged to permit fluid to pass through the porous part of the outer body into the cavity.

2. The apparatus (101; 201) as claimed in claim 1, wherein the one or more side walls (104; 204) comprise one or more sides of a prism or cylinder, optionally wherein the inner body (102; 202) is hollow.

3. The apparatus (101; 201) as claimed in claim 1 or 2, wherein the one or more side walls (104; 204) of the inner body (102; 202) are deformable.

4. The apparatus (101; 201) as claimed in any one of the preceding claims, wherein the outer face (107; 207) of the inner body (102; 202) is substantially rigid.

5. The apparatus (101; 201) as claimed in any one of the preceding claims, wherein the plurality of strain sensors (103) comprise fibre optic sensors, e.g. fibre Bragg gratings, optionally wherein the plurality of fibre optic sensors are provided in a single optical fibre.

6. The apparatus (101; 201) as claimed in any one of the preceding claims, wherein the porous part (110; 210) of the outer body (108; 208) comprises a rim extending around at least some of the perimeter of the outer face (107; 207) of the inner body (102; 202), optionally wherein the rim closes and extends across the cavity (109; 209) between the inner and outer bodies.

7. The apparatus (101; 201) as claimed in claim 6, wherein the rim (110; 210) lies in substantially the same plane as the outer face (107; 207) of the inner body (102; 202).

8. The apparatus (101; 201) as claimed in claim 6 or 7, wherein the rim (110; 210) is secured between the outer face (107; 207) of the inner body (102; 202) and the one or more side walls (104; 204) of the outer body (108; 208) by a sealant (111, 112; 211).

9. The apparatus (101; 201) as claimed in any one of the preceding claims, wherein the porous part (110; 210) of the outer body (108; 208) comprises porous stone, sand embedded in a porous matrix or a sintered metal.

10. The apparatus (101; 201) as claimed in any one of the preceding claims, wherein the cavity (109; 209) is filled with an incompressible liquid.

11. A system (100) for measuring contact stresses between an apparatus (101; 201) and soil (2) in contact with the apparatus, the system comprising the apparatus as claimed in any one of the preceding claims, and processing circuitry (115) arranged to determine contact stresses experienced by the outer face (107; 207) from the soil, optionally wherein the processing circuitry is arranged to determine the normal and the frictional contact stresses of the soil on the outer face of the inner body (102; 202), and/or to determine the pore water pressure of the soil on the outer face of the inner body, and/or to determine the temperature of the apparatus, using the data representative of the strains experienced by the strain sensors (103) that has been captured by the strain sensors.

12. The system (100) as claimed in claim 11, wherein the processing circuitry (115) is arranged to calibrate the plurality of strain sensors (103) to determine the relationship between the strains measured by the plurality of strain sensors and one or more of the normal contact stress, the frictional contact stresses, the pore water pressure and the temperature of the soil (2), optionally wherein the processing circuitry is arranged to calibrate the plurality of strain sensors using machine learning to determine a mapping of the data representative of strains measured by the plurality of strain sensors to one or more of the normal contact stress, the frictional contact stresses, the pore water pressure and the temperature of the soil.

13. The system as claimed in claim 12, wherein the processing circuitry (115) is arranged to use the determined relationship or mapping to determine one or more of the normal contact stress, the frictional contact stresses, the pore water pressure and the temperature of the soil (2) using the strains measured by the plurality of strain sensors (103).

14. A method of measuring contact stresses using an apparatus (101; 201), wherein the apparatus comprises:

an inner body (102; 202) defining a volume (105; 205), the inner body having an outer face (107; 207) for contacting soil and one or more side walls (104; 204);
a plurality of strain sensors (103) arranged on the one or more side walls of the inner body;
wherein the method comprises:
capturing data representative of the strain experienced by the strain sensors on the one or more side walls of the inner body;

and **characterised in that**:

the method is a method of measuring contact stresses between the apparatus and soil in contact with the apparatus;
the volume defined by the inner body is impermeable;
the apparatus further comprises an outer body (108; 208) at least partially surrounding the inner body, wherein at least part of the outer body is spaced from the one or more side walls of the inner body to define a cavity (109; 209) therebetween;
part (110; 210) of the outer body is porous and is arranged to permit fluid to pass through the porous part of the outer body into the cavity; and determining the contact stresses experienced by the outer face of the inner body from the soil using the data representative of the strain experienced by the strain sensors.

15. A computer readable storage medium storing computer software code which when executing on a data processing system performs a method as claimed in claim 14.

**Patentansprüche**

1. Einrichtung (101; 201) zum Messen von Kontaktspannungen, wobei die Einrichtung umfasst:

einen Innenkörper (102; 202), der ein Volumen (105; 205) definiert, wobei der Innenkörper eine Außenfläche (107; 207) zum Kontaktieren von Boden (2) und eine oder mehrere Seitenwände (104; 204) aufweist;
eine Vielzahl von Dehnungssensoren (103), die an der einen oder den mehreren Seitenwänden des Innenkörpers eingerichtet sind, zum Messen von Dehnung an der einen oder den mehreren Seitenwänden des Innenkörpers derart, dass die Kontaktspannungen dann bestimmt werden können;

**dadurch gekennzeichnet, dass**:

die Einrichtung zum Messen von Kontaktspannungen zwischen der Einrichtung und Boden, der mit der Einrichtung in Kontakt steht, geeignet ist;
das von dem Innenkörper definierte Volumen undurchlässig ist;
die Einrichtung weiter einen Außenkörper (108; 208) umfasst, der den Innenkörper mindestens teilweise umgibt, wobei mindestens ein Teil des Außenkörpers von der einen oder den mehreren Seitenwänden des Innenkörpers beabstandet ist, um dazwischen einen Hohlraum (109; 209) zu definieren; und
ein Teil (110; 210) des Außenkörpers porös ist und so eingerichtet ist, dass er es Fluid ermöglicht, durch den porösen Teil des Außenkörpers in den Hohlraum zu gelangen.

2. Einrichtung (101; 201) nach Anspruch 1, wobei die eine oder die mehreren Seitenwände (104; 204) eine oder mehrere Seiten eines Prismas oder Zylinders umfassen, gegebenenfalls wobei der Innenkörper (102; 202) hohl ist.

3. Einrichtung (101; 201) nach Anspruch 1 oder 2, wobei die eine oder die mehreren Seitenwände (104; 204) des Innenkörpers (102; 202) verformbar sind.

4. Einrichtung (101; 201) nach einem der vorstehenden Ansprüche, wobei die Außenfläche (107; 207) des Innenkörpers (102; 202) im Wesentlichen starr ist.

5. Einrichtung (101; 201) nach einem der vorstehenden Ansprüche, wobei die Vielzahl von Dehnungssensoren (103) faseroptische Sensoren, z. B. Faser-Bragg-Gitter, umfassen, gegebenenfalls wobei die Vielzahl von faseroptischen Sensoren in einer einzigen optischen Faser bereitgestellt sind.

6. Einrichtung (101; 201) nach einem der vorstehenden Ansprüche, wobei der poröse Teil (110; 210) des Außenkörpers (108; 208) einen Rand umfasst, der sich um mindestens einen Teil des Umfangs der Außenfläche (107; 207) des Innenkörpers (102; 202) erstreckt, gegebenenfalls wobei der Rand den Hohlraum (109; 209) zwischen dem Innen- und dem Außenkörper verschließt und sich über diesen erstreckt.

7. Einrichtung (101; 201) nach Anspruch 6, wobei der Rand (110; 210) im Wesentlichen in der gleichen Ebene liegt wie die Außenfläche (107; 207) des Innenkörpers (102; 202).

8. Einrichtung (101; 201) nach Anspruch 6 oder 7, wobei der Rand (110; 210) zwischen der Außenfläche (107; 207) des Innenkörpers (102; 202) und der einen oder den mehreren Seitenwänden (104; 204) des Außenkörpers (108; 208) durch ein Dichtungsmittel (111, 112; 211) gesichert ist.

9. Einrichtung (101; 201) nach einem der vorstehenden Ansprüche, wobei der poröse Teil (110; 210) des Außenkörpers (108; 208) porösen Stein, in eine poröse Matrix eingebetteten Sand oder ein Sintermetall umfasst.

10. Einrichtung (101; 201) nach einem der vorstehenden Ansprüche, wobei der Hohlraum (109; 209) mit einer nicht komprimierbaren Flüssigkeit gefüllt ist.

11. System (100) zum Messen von Kontaktspannungen zwischen einer Einrichtung (101; 201) und Boden (2), der mit der Einrichtung in Kontakt steht, wobei das System die Einrichtung nach einem der vorstehenden Ansprüche und Verarbeitungsschaltungen (115) umfasst, die so eingerichtet sind, dass sie Kontaktspannungen, die die Außenfläche (107; 207) von dem Boden erfährt, bestimmen, gegebenenfalls wobei die Verarbeitungsschaltungen so eingerichtet sind, dass sie die Normal- und die Reibungskontaktspannungen des Bodens an der Außenfläche des Innenkörpers (102; 202) bestimmen und/oder den Porenwasserdruck des Bodens an der Außenfläche des Innenkörpers bestimmen und/oder die Temperatur der Einrichtung bestimmen, unter Verwendung der Daten, die für die von den Dehnungssensoren (103) erfahrenen Dehnungen, welche von den Dehnungssensoren erfasst wurden, repräsentativ sind.

12. System (100) nach Anspruch 11, wobei die Verarbeitungsschaltungen (115) so eingerichtet sind, dass sie die Vielzahl von Dehnungssensoren (103) kalibrieren, um die Beziehung zwischen den von der Vielzahl von Dehnungssensoren gemessenen Dehnungen und einem oder mehreren der Normal-Kontaktspannung, der Reibungskontaktspannungen, des Porenwasserdrucks und der Temperatur des Bodens (2) zu bestimmen, gegebenenfalls wobei die Verarbeitungsschaltungen so eingerichtet sind, dass sie die Vielzahl von Dehnungssensoren unter Verwendung von maschinellem Lernen kalibrieren, um eine Zuordnung der Daten, die für die von der Vielzahl von Dehnungssensoren gemessenen Dehnungen repräsentativ sind, zu einem oder mehreren der Normal-Kontaktspannung, der Reibungskontaktspannungen, des Porenwasserdrucks und der Temperatur des Bodens zu bestimmen.

13. System nach Anspruch 12, wobei die Verarbeitungsschaltungen (115) so eingerichtet sind, dass sie die bestimmte Beziehung oder Zuordnung verwenden, um eines oder mehrere der Normal-Kontaktspannung, der Reibungskontaktspannungen, des Porenwasserdrucks und der Temperatur des Bodens (2) unter Verwendung der von der Vielzahl von Dehnungssensoren (103) gemessenen Dehnungen zu bestimmen.

14. Verfahren zum Messen von Kontaktspannungen unter Verwendung einer Einrichtung (101; 201), wobei die Einrichtung umfasst:

    einen Innenkörper (102; 202), der ein Volumen (105; 205) definiert, wobei der Innenkörper eine Außenfläche (107; 207) zum Kontaktieren von Boden und eine oder mehrere Seitenwände (104; 204) aufweist;
    eine Vielzahl von Dehnungssensoren (103), die an der einen oder den mehreren Seitenwänden des Innenkörpers eingerichtet sind; wobei das Verfahren umfasst:
    Erfassen von Daten, die für die von den Dehnungssensoren an der einen oder den mehreren Seitenwänden des Innenkörpers erfahrene Dehnung repräsentativ sind;
    und **dadurch gekennzeichnet, dass**:

    das Verfahren ein Verfahren zum Messen von Kontaktspannungen zwischen der Einrichtung und Boden, der mit der Einrichtung in Kontakt steht, ist;
    das von dem Innenkörper definierte Volumen undurchlässig ist;
    die Einrichtung weiter einen Außenkörper (108; 208) umfasst, der den Innenkörper mindestens teilweise umgibt, wobei mindestens ein Teil des Außenkörpers von der einen oder den mehreren Seitenwänden des Innenkörpers beabstandet ist, um dazwischen einen Hohlraum (109; 209) zu definieren;
    ein Teil (110; 210) des Außenkörpers porös ist und so eingerichtet ist, dass er es Fluid ermöglicht, durch den porösen Teil des Außenkörpers in den Hohlraum zu gelangen; und
    Bestimmen der Kontaktspannungen, die die Außenfläche des Innenkörpers von dem Boden erfährt, unter Verwendung der Daten, die für die von den Dehnungssensoren erfahrene Dehnung repräsentativ sind.

15. Computerlesbares Speichermedium, das Computersoftwarecode speichert, der bei Ausführung auf einem Datenverarbeitungssystem ein Verfahren nach Anspruch 14 durchführt.

## Revendications

1.  Appareil (101; 201) destiné à mesurer des tensions de contact, l'appareil comprenant :

    un corps intérieur (102 ; 202) définissant un volume (105 ; 205), le corps intérieur présentant une face extérieure (107 ; 207) pour contact avec un sol (2) et une ou plusieurs parois latérales (104 ; 204) ;
    une pluralité de capteurs de contrainte (103) agencés sur les une ou plusieurs parois latérales du corps intérieur pour mesurer une contrainte sur les une ou plusieurs parois latérales du corps intérieur, de telle sorte que les tensions de contact sont alors aptes à être déterminées ;
    **caractérisé en ce que** :

    l'appareil est adapté pour mesurer des tensions de contact entre l'appareil et le sol en contact avec l'appareil ;
    le volume défini par le corps intérieur est imperméable ;
    l'appareil comprend en outre un corps extérieur (108 ; 208) entourant au moins partiellement le corps intérieur, dans lequel au moins une partie du corps extérieur est espacée des une ou plusieurs parois latérales du corps intérieur pour définir une cavité (109 ; 209) entre elles ; et
    une partie (110 ; 210) du corps extérieur est poreuse et est agencée pour permettre à un fluide de passer à travers la partie poreuse du corps extérieur jusque dans la cavité.

2.  Appareil (101; 201) selon la revendication 1, dans lequel les une ou plusieurs parois latérales (104 ; 204) comprennent un ou plusieurs côtés d'un prisme ou cylindre, éventuellement dans lequel le corps intérieur (102 ; 202) est creux.

3.  Appareil (101; 201) selon la revendication 1 ou 2, dans lequel les une ou plusieurs parois latérales (104 ; 204) du corps intérieur (102 ; 202) sont déformables.

4.  Appareil (101; 201) selon l'une quelconque des revendications précédentes, dans lequel la face extérieure (107 ; 207) du corps intérieur (102 ; 202) est sensiblement rigide.

5.  Appareil (101 ; 201) selon l'une quelconque des revendications précédentes, dans lequel la pluralité de capteurs de contrainte (103) comprennent des capteurs à fibre optique, par exemple des réseaux de Bragg sur fibre, éventuellement dans lequel la pluralité de capteurs à fibre optique sont disposés dans une seule fibre optique.

6.  Appareil (101 ; 201) selon l'une quelconque des revendications précédentes, dans lequel la partie poreuse (110 ; 210) du corps extérieur (108 ; 208) comprend un rebord s'étendant autour d'au moins une partie du périmètre de la face extérieure (107 ; 207) du corps intérieur (102 ; 202), éventuellement dans lequel le rebord ferme et s'étend à travers la cavité (109 ; 209) entre les corps intérieur et extérieur.

7.  Appareil (101; 201) selon la revendication 6, dans lequel le rebord (110 ; 210) repose sensiblement dans le même plan que la face extérieure (107; 207) du corps intérieur (102 ; 202).

8.  Appareil (101; 201) selon la revendication 6 ou 7, dans lequel le rebord (110 ; 210) est fixé entre la face extérieure (107 ; 207) du corps intérieur (102 ; 202) et les une ou plusieurs parois latérales (104 ; 204) du corps extérieur (108 ; 208) par un agent d'étanchéité (111, 112 ; 211).

9.  Appareil (101 ; 201) selon l'une quelconque des revendications précédentes, dans lequel la partie poreuse (110 ; 210) du corps extérieur (108 ; 208) comprend de la pierre poreuse, du sable incorporé dans une matrice poreuse ou un métal fritté.

10. Appareil (101 ; 201) selon l'une quelconque des revendications précédentes, dans lequel la cavité (109 ; 209) est remplie d'un liquide incompressible.

11. Système (100) destiné à mesurer des tensions de contact entre un appareil (101 ; 201) et le sol (2) en contact avec l'appareil, le système comprenant l'appareil selon l'une quelconque des revendications précédentes, et des circuits de traitement (115) agencés pour déterminer des tensions de contact subies par la face extérieure (107 ; 207) depuis le sol, éventuellement dans lequel les circuits de traitement sont agencés pour déterminer les tensions de contact normales et de frottement du sol sur la face extérieure du corps intérieur (102 ; 202), et/ou pour déterminer la pression d'eau interstitielle du sol sur la face extérieure du corps intérieur, et/ou pour déterminer la température de l'appareil, à l'aide des données représentatives des contraintes subies par les capteurs de contrainte (103) qui ont été capturées par les capteurs de contrainte.

12. Système (100) selon la revendication 11, dans lequel les circuits de traitement (115) sont agencés pour étalonner la pluralité de capteurs de contrainte (103) afin de déterminer la relation entre les contraintes mesurées par la pluralité de capteurs de contrainte et une ou plusieurs parmi la tension de contact normale, les tensions de contact de frottement, la pression d'eau interstitielle et la température du sol (2), éventuellement dans lequel les circuits de traitement sont agencés pour étalonner la pluralité de capteurs de contrainte par apprentissage automatique pour déterminer un mappage des données représentatives de contraintes mesurées par la pluralité de capteurs de contrainte sur une ou plusieurs parmi la tension de contact normale, les tensions de contact de frottement, la pression d'eau interstitielle et la température du sol.

13. Système selon la revendication 12, dans lequel les circuits de traitement (115) sont agencés pour utiliser la relation ou le mappage déterminé afin de déterminer une ou plusieurs parmi la tension de contact normale, les tensions de contact de frottement, la pression d'eau interstitielle et la température du sol (2) à l'aide des contraintes mesurées par la pluralité de capteurs de contrainte (103).

14. Procédé de mesure de tensions de contact à l'aide d'un appareil (101; 201), dans lequel l'appareil comprend :

   un corps intérieur (102 ; 202) définissant un volume (105 ; 205), le corps intérieur présentant une face extérieure (107 ; 207) pour contact avec un sol et une ou plusieurs parois latérales (104 ; 204) ;
   une pluralité de capteurs de contrainte (103) agencés sur les une ou plusieurs parois latérales du corps intérieur ; dans lequel le procédé comprend :
   la capture de données représentatives de la contrainte subie par les capteurs de contrainte sur les une ou plusieurs parois latérales du corps intérieur ;
   et **caractérisé en ce que** :

      le procédé est un procédé de mesure de tensions de contact entre l'appareil et le sol en contact avec l'appareil ;
      le volume défini par le corps intérieur est imperméable ;
      l'appareil comprend en outre un corps extérieur (108 ; 208) entourant au moins partiellement le corps intérieur, dans lequel au moins une partie du corps extérieur est espacée des une ou plusieurs parois latérales du corps intérieur pour définir une cavité (109 ; 209) entre elles ;
      une partie (110 ; 210) du corps extérieur est poreuse et est agencée pour permettre à un fluide de passer à travers la partie poreuse du corps extérieur jusque dans la cavité ; et
      la détermination des tensions de contact subies par la face extérieure du corps intérieur depuis le sol à l'aide des données représentatives de la contrainte subie par les capteurs de contrainte.

15. Support de stockage lisible par ordinateur stockant un code de logiciel informatique qui, lorsqu'il est exécuté sur un système de traitement de données, effectue un procédé selon la revendication 14.

Figure 1a

Figure 1b

Figure 1c

Figure 2

Figure 3a

110

107

102

103

106

108

Figure 3b

Figure 4

102

Figure 5

$\sigma_n{}'$

107

$\tau_x \text{ or } \tau_y$

102

106

Figure 6a

$u$

107

102

106

Figure 6b

Figure 7

Figure 8

EP 4 028 742 B1

Figure 9

Figure 10

Figure 11a

210

211

207

206

202

208

Figure 11b

Figure 12

Figure 13

Figure 14a

Figure 14b

**REFERENCES CITED IN THE DESCRIPTION**

**Patent documents cited in the description**

- US 2003106379 A1

- CN 107034870 A